# EUROPEAN PATENT APPLICATION

(11) **EP 4 564 306 A1**
(43) Date of publication of application: **04.06.2025**
(21) Application number: 24207406.0
(22) Date of filing: 18.10.2024
(51) Int. Cl.: G06V 10/147, A01B 69/00, G06V 10/10, G06V 10/80, G06V 20/58, G06V 10/82

(54) **AGRICULTURAL VEHICLES INCLUDING AN IMAGING CONTROLLER, AND RELATED METHODS**

(30) Priority: 29.11.2023 GB 202318255
(71) Applicant: AGCO International GmbH, 8212 Neuhausen am Rheinfall (CH)
(72) Inventor: CHRISTIANSEN, Martin Peter, 8930 Randers (DK); MUJKIC, Esma, 8930 Randers (DK); SLEZAK, Filip, 8930 Randers (DK); BECK, Nicolai, Randers (DK); TOUSTROUP, Viktor Johns, Randers (DK); JENSEN, Anders Thuelund, Randers (DK)
(74) Representative: AGCO Intellectual Property Department

(57) **Abstract**

An agricultural vehicle includes cameras and a LiDAR sensor operably coupled to the agricultural vehicle, and an imaging controller operably coupled to the LiDAR sensor and the cameras. The imaging controller includes at least one processor, and instructions that cause the processor to receive image data from the cameras, receive LiDAR data from the LiDAR sensor, analyze the image data from each of the cameras to generate labeled image data, analyze the LiDAR data to generate labeled LiDAR data, and fuse the labeled image data with the labeled LiDAR data. Related agricultural vehicles and methods are also disclosed.

## Description

### CROSS-REFERENCE TO RELATED APPLICATION

N/A

### FIELD

Embodiments of the present disclosure relate generally to agricultural vehicles including one or more cameras, at least one LiDAR, and an imaging controller configured to determine (e.g., image) surroundings of the agricultural vehicle in an agricultural environment to facilitate one or more control operations of the agricultural vehicle, and to related systems and methods.

### BACKGROUND

Agricultural operations, such as planting, tilling, or spraying, are conventionally performed in a field. The field may include obstacles, such as bumps, rocks, animals, humans, windmills, poles, etc. that should be avoided by the agricultural vehicle performing the agricultural operation. However, an operator of the agricultural vehicle may not see the obstacle or may see the obstacle but may not be able to control the agricultural vehicle in time to avoid hitting the obstacle. The environment in which the agricultural operations are performed may include many unknowns (e.g., wild animals, farm animals, grazing animals, boulders, other agricultural machines and vehicles (e.g., trailers, tractors, combines, planters, implements) that are not typically found on traveled roadways (e.g., paved roads, streets, highways, freeways). Such objects may act and move differently than objects found on traveled roadways. In addition, many objects may be obstructed from the field of view of the operator in agricultural environments. For example, objects may be hidden in rows of crops, behind bushes or tress, or in fields of hay or grass. The disparate objects and animals that may be found in an agricultural environment impart unpredictability and make operation of agricultural vehicles particularly difficult.

### BRIEF SUMMARY

According to some embodiments, an agricultural vehicle cameras operably coupled to the agricultural vehicle, a LiDAR sensor operably coupled to the agricultural vehicle, and an imaging controller operably coupled to the LiDAR sensor and the cameras. The imaging controller includes at least one processor, and at least one non-transitory computer-readable storage medium having instructions thereon that, when executed by the at least one processor, cause the imaging controller to receive image data from the cameras, receive LiDAR data from the LiDAR sensor, analyze the image data from each of the cameras using one or more agricultural object detection neural networks trained with an agricultural dataset to generate labeled image data, analyze the LiDAR data from the LiDAR sensor using a LiDAR agricultural object detection neural network trained with another agricultural dataset to generate labeled LiDAR data, and fuse the labeled image data with the labeled LiDAR data.

Each camera may have a different field of view than the other cameras. In other embodiments, a field of view of at least one camera overlaps at least a portion of a field of view of at least another camera.

The imaging controller may include instructions thereon that, when executed by the at least one processor, cause the imaging controller to analyze the image data from at least one camera using an agricultural object detection neural networks different than another agricultural object detection neural networks used to analyze the image data from at least another camera.

In some embodiments, the instructions, when executed by the at least one processor, cause the imaging controller to identify pixels in the labeled image data including image data from two or more cameras that do not agree with one another.

The labeled image data may include only image data from a camera having a relatively narrower field of view in regions having overlapping fields of view of two or more cameras.

The imaging controller may include instructions thereon that, when executed by the at least one processor, cause the imaging controller to cause the cameras to generate the image data at different times.

In some embodiments, the instructions, when executed by the at least one processor, cause the imaging controller to fuse segmented image data with the labeled LiDAR data.

In some embodiments, the imaging processor includes instructions thereon that, when executed by the at least one processor, cause the imaging controller to perform one or more object segmentation operations on the fused data.

The image data may include RGB data and at least one of SWIR data and LWIR data.

In some embodiments, the agricultural vehicle further includes at least one additional controller configured to perform one or more control operations of the agricultural vehicle based on the fused data.

In some embodiments, an agricultural vehicle includes a plurality of cameras, each individually operably coupled to the agricultural vehicle, a LiDAR sensor operably coupled to the agricultural vehicle, and an imaging controller operably coupled to the LiDAR sensor and the cameras. The imaging controller includes at least one processor, and at least one non-transitory computer-readable storage medium having instructions thereon that, when executed by the at least one processor, cause the imaging controller to receive image data from the cameras, receive LiDAR data from the LiDAR sensor, compare pixels of the image data from each camera to corresponding pixels of the image data from another camera, analyze the LiDAR data from the LiDAR sensor to generate labeled LiDAR data, and fuse the image data with the labeled LiDAR data to generate fused data.

The imaging controller may include instructions thereon that, when executed by the at least one processor, cause the imaging controller to label pixels of the image data that do not match the image data of corresponding pixels from another camera.

In some embodiments, the imaging controller includes instructions thereon that, when executed by the at least one processor, cause the imaging controller to selectively fuse, with the labeled LiDAR data, image data from a camera having a relatively narrower field of view than another camera in regions with an overlapping field of view.

The imaging controller may include instructions thereon that, when executed by the at least one processor, cause the imaging controller to label the image data prior to comparing pixels of the image data.

In some embodiments, the imaging controller includes instructions thereon that, when executed by the at least one processor, cause the imaging controller to segment the image data and generated segmented image data prior to fusing the image data with the labeled LiDAR data.

In some embodiments, a method of operating an agricultural vehicle includes receiving image data from cameras operably coupled to the agricultural vehicle, receiving LiDAR data from a LiDAR sensor operably coupled to the agricultural vehicle, analyzing the image data from each camera using one or more agricultural object detection neural networks trained with an agricultural dataset to generate labeled image data, fusing the LiDAR data with labeled image data to generate fused data, and controlling one or more operations of the agricultural vehicle based on the fused data.

The method may further include combining the image data from each camera to generate combined image data, wherein analyzing the image data from each camera comprises analyzing the combined image data.

In some embodiments, the method further includes performing an object segmentation operation on the fused data to identify instances of objects in the fused data.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 is a simplified perspective view of an agricultural vehicle including an imaging controller, in accordance with one or more embodiments of the disclosure;
FIG. 2A is a simplified schematic illustration of an image collection unit, in accordance with one or more embodiments of the disclosure;
FIG. 2B is a simplified schematic illustration of an image collection unit, in accordance with one or more embodiments of the disclosure;
FIG. 3 is a simplified schematic illustration of a camera 300, in accordance with one or more embodiments of the disclosure;
FIG. 4 is a simplified perspective view of a LiDAR sensor 400, in accordance with one or more embodiments of the disclosure;
FIG. 5 is a simplified schematic of an imaging controller, in accordance with one or more embodiments of the disclosure;
FIG. 6 is a simplified schematic of an imaging controller, in accordance with one or more embodiments of the disclosure;
FIG. 7 is a simplified flow chart illustrating a method of operating an agricultural machine, in accordance with embodiments of the disclosure; and
FIG. 8 is a schematic of a computer-readable storage medium including processor-executable instructions configured to embody one or more of the methods of operating an agricultural vehicle.

### DETAILED DESCRIPTION

The illustrations presented herein are not actual views of any agricultural vehicles or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all elements to form a complete structure, assembly, spreader, or agricultural implement. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "substantially" in reference to a given parameter, property, or condition means and includes to a degree that one of ordinary skill in the art would understand that the given parameter, property, or condition is met with a degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter).

As used throughout, ranges are used as shorthand for describing each and every value that is within the range. Any value within the range can be selected as the terminus of the range.

From reading the following description it should be understood that the terms "longitudinal" and "transverse" are made in relation to a machine's (e.g., agricultural implement's, agricultural application machine) normal direction of travel. In other words, the term "longitudinal" equates to the fore-and-aft direction, whereas the term "transverse" equates to the crosswise direction, or left and right. As used herein, the terms "lateral" and "transverse" are used interchangeably. Furthermore, the terms "axial" and "radial" are made in relation to a rotating body such as a shaft, wherein axial relates to a direction along the rotation axis and radial equates to a direction perpendicular to the rotation axis.

According to embodiments described herein, an agricultural vehicle (also referred to as a "vehicle") includes an imaging controller configured to detect agricultural objects (e.g., wildlife, other agricultural vehicles, obstacles in the field) in an agricultural field during one or more agricultural operations. The vehicle is configured to perform the agricultural operations safely without inadvertent contact between the vehicle and the detected objects. The vehicle may include one or more cameras (e.g., multiple cameras) and one or more LiDAR sensors operably coupled thereto and configured to generate image data and LiDAR data, respectively. The vehicle may include a computing system including the imaging controller configured to receive the image data and the LiDAR data and fuse the image data and the LiDAR data to detect the agricultural objects in the agricultural field. The computing system may be configured to perform one or more control operations based on the fused data and/or provide instructions to a navigation controller or another controller of the vehicle to control one or more operations (e.g., acceleration, velocity, braking, steering) of the vehicle.

In some embodiments, the imaging controller may include a camera processing manager configured to receive the image data from more than one camera. The camera processing manager may be configured to perform one or more object detection operations on the image data from each camera to identify and label (e.g., classify) objects in the image data to generate labeled image data. In some embodiments, the image data from each camera may be combined to generate combined image data based on the image data from each camera, and the camera processing manager may perform the one or more object detection operations on the combined image data. In other embodiments, the camera processing manager performs the one or more object detection operations on the image data from each camera individually, and generates labeled image data based on the image data from each camera. In some embodiments, the camera processing manager is configured to perform object tracking operation on the detected objects in the labeled image data, each tracked object defined by pixels having image data (e.g., color data, SWIR data, NIR data). In some embodiments, the cameras include an overlapping (e.g., the same) field of view (FOV). In other embodiments, the cameras include non-overlapping FOVs or have at least partially overlapping, but different FOVs.

Performing the object detection operation may include performing one or more object segmentation operations on the image data. The object segmentation operation may be performed on the image data from each individual camera separately, or may be performed on the combined image data. In some embodiments, the object segmentation operation includes an instance segmentation operation. The object detection, object segmentation, and/or object tracking may be performed using an object detection neural network specifically trained for identifying and labeling one or more agricultural objects to generate the labeled image data. The object detection neural network may include associations between different types of agricultural objects (e.g., a tractor and a trailer, a towed implement and a tractor, etc.), which may be provided in metadata of the labeled image data. In embodiments where the labeled image data has been segmented, the image data may not include pixels that have not been labeled as an object and/or have been labeled as an object of interest (e.g., an agricultural object) (background pixels).

The labeled image data may be fused with the LiDAR data (e.g., a 3D LiDAR point cloud) using a fusion manager. In some embodiments, the LiDAR data is analyzed with a LiDAR agricultural object detection neural network trained to identify agricultural objects in the LiDAR data and generate labeled LiDAR data. The fusion manager may be configured to perform one or more or more sensor fusion operations to form fused data including the image data (e.g., the labeled image data) and the LiDAR data (e.g., the labeled LiDAR data). In some embodiments, since the image data fused with the 3D LiDAR point cloud has been segmented, the fusion operation may be performed relatively faster and using less processing power compared to embodiments where the image data has not been segmented. In other words, since the labeled image data fused with the LiDAR data does not include the background pixels, the fusion operation may be performed significantly faster than conventional fusion operations. The faster fusion of the labeled image data and the LiDAR data facilitates real-time object detection and avoidance during performance of one or more agricultural operations using the imaging controller.

The fused data may include pixels, each pixel of the fused data including the image data, velocity, distance (e.g., depth), azimuth angle, elevational angle, and metadata (e.g., object classification data, object association data, data with respect to which of multiple cameras the image data for each pixel is based, flags for image data that does not match image data of another camera). In some embodiments, such as where the camera processing manager does not perform an object segmentation operation on the image data, the imaging controller may be configured to perform an object segmentation operation on the fused data using an object segmentation neural network trained with agricultural data including image data and LiDAR data.

The imaging controller may be configured to analyze the fused data and the computing system may be configured to perform one or more control operations based on the fused data. For example, the control system may be configured to provide instructions to a steering system, a navigation system, a braking system, and/or a propulsion system, to control operation of the vehicle. In some embodiments, the control system performs a collision avoidance operation bas ed on the fused data. The imaging system may facilitate operation of the vehicle without undesirably colliding into agricultural objects that may be present in the agricultural field. In some embodiments, the imaging system facilitates avoidance of objects in the agricultural field that may not be seen by the operator, but are detected by the imaging controller. Further, because of the relatively fast processing

Obtaining the image data with cameras and the LiDAR data with the LiDAR sensor facilitates more precise object detection and tracking than use of only image data or LiDAR data. For example, the image data may facilitate object identification and classification while the LiDAR data may facilitate object location and velocity detection. In addition, the LiDAR data may provide distance and velocity data of the objects even in adverse weather conditions. The LiDAR data may be provided as a 3D LiDAR point cloud or analyzed to generate a 3D LiDAR point cloud, including spatial information that may not be included in the image data. The combination of the image data and the LiDAR data may facilitate safe operation of the vehicle during agricultural operations. For example, the vehicle may be operated without colliding into agricultural objects since the agricultural objects are detected with the imaging controller and avoided by the vehicle (e.g., by performing one or more navigation controls) and/or presented to the operator so that the operator may avoid the detected agricultural objects.

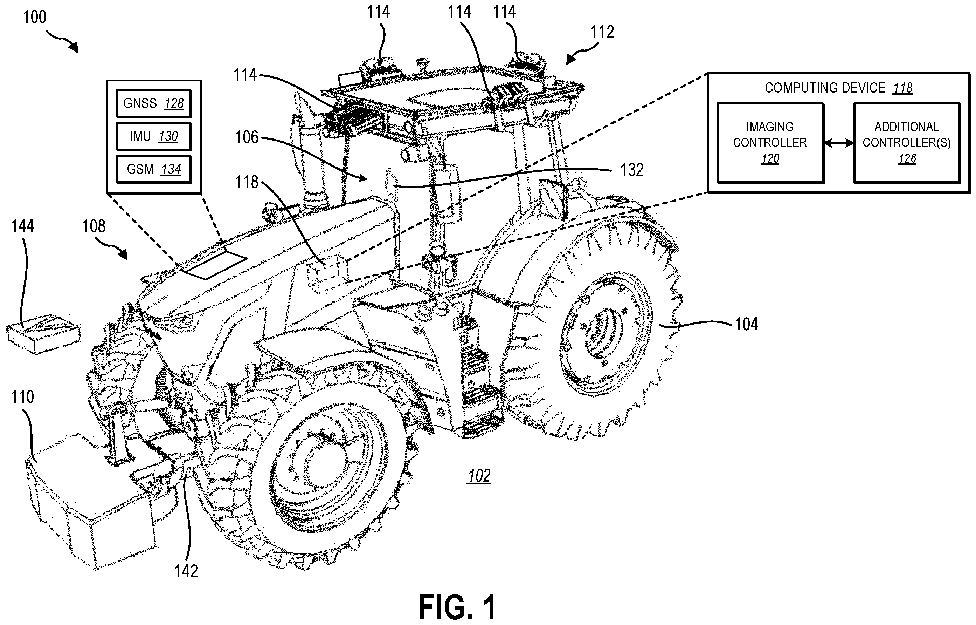

FIG. 1 is a simplified perspective view of an agricultural vehicle 100 (simply referred to herein as a "vehicle") including an imaging controller 120 and one or more additional controllers 126 as part of a computing device 118, in accordance with one or more embodiments of the disclosure. In some embodiments, the vehicle 100 includes a tractor. However, the vehicle 100 may include agricultural vehicles other than and/or in addition to a tractor, such as, for example, a combine, a planter, a tiller, a sprayer, a harvester, a swather, a mower, a spreader, or another agricultural vehicle. The vehicle 100 may be configured to drive over a ground 102, such as a field. As described in further detail herein, the field may include agricultural objects, such as one or more of crops, weeds, trees, rocks, agricultural equipment, animals (e.g., livestock), humans, or other objects and/or animals that may be found in an agricultural environment. The vehicle 100 includes tires 104 configured for facilitating traversal of the vehicle 100 over the ground 102.

The vehicle 100 includes an operator cabin 106 from which an operator of the vehicle 100 may control the vehicle 100, and an engine compartment 108 housing an engine or other propulsion system for providing a motive force for moving the vehicle 100. In some embodiments, the propulsion system includes an engine. In other embodiments, the propulsion system includes motors operably coupled to wheels of the vehicle 100. The vehicle 100 includes a steering system (e.g., a steering wheel (located in the operator cabin 106) and associated steering column, universal joint, and rack-and-pinion) configured for facilitating steering and navigation of the vehicle 100. The vehicle 100 may include one or more additional structures or assemblies, such as a header 110, configured for performing one or more agricultural operations (e.g., towing an agricultural implement (e.g., a spreader, row units of a planter), a trailer, etc.

The vehicle 100 may include a vision system 112 including one or more image collection units 114 operably coupled to the vehicle 100. The vision system 112 may be configured to facilitate imaging an environment around the vehicle 100, such as during use and operation thereof. The image collection units 114 may be operably coupled to the vehicle 100, such as on top of the operator cabin 106, or on top of the engine compartment 108). The vision system 112 may include more than one image collection units 114. For example, the vision system 112 may include a vision collection unit 114 oriented to face a front direction of the vehicle 100 and another vision collection unit 114 oriented to face a rear direction of the vehicle 100. In other embodiments, the vision system 112 includes four vision collection units 114, such as one at each of the front, rear, right, and left side of the vehicle 100. In some embodiments, the image collection unit(s) 114 are configured to provide a 3D surround stereo view of the surroundings of the vehicle 100. In some embodiments, each vision collection unit 114 is substantially the same. In other embodiments, at least one of the vision collection units 114 is different than at least another of the image collection units 114. In yet other embodiments, the vision system 112 includes only one image collection unit 114 (e.g., a front-facing image collection unit 114).

Image data generated with cameras of the image collection units 114 and LiDAR data generated with LiDAR sensors of the image collection units 114 may be of the environment around the vehicle 100. For example, the image data and the LiDAR data may be of one or more of the ground 102, animals (e.g., livestock, wild animals, domestic animals), humans, crops, rows of crops, trees, weeds, other plants, utility lines, bales of hay, rocks, wind turbines, fences and fence posts, shelter belts (lines of trees), agricultural vehicles (e.g., tractors, planters, sprayers, combiners, harvesters, mowers, trailers, forager), or other living object or inanimate object that may be proximate the vehicle 100 in an agricultural environment.

The computing device 118 (also referred to as an "electronic control unit" (ECU), a "system controller," or a "computing unit") may be configured to facilitate one or more control operations (e.g., safety operations, object detection, object avoidance, and remote planning operations) of the vehicle 100 and/or agricultural operation. The computing device 118 may include the imaging controller 120, and one or more additional controllers 126. The imaging controller 120 may also be referred to herein as a "safety system" or a "safety controller."

While the computing device 118 is illustrated as proximate the engine compartment 108, such as between the engine compartment 108 and the operator cabin 106, in FIG. 1, the disclosure is not so limited. The computing device 118 may be operably coupled to the vehicle 100 at other locations. In some embodiments, the computing device 118 is located inside the operator cabin 106, such as proximate an I/O device 132. In some embodiments, the computing device 118 is located on a device separate from the vehicle 100 (but located within the vehicle 100, such as in the operator cabin 106), such as on a tablet, laptop, or other device.

The vehicle 100 may further include a global navigation satellite system (GNSS) receiver 128, an inertial measurement unit (IMU) 130, the input/output (I/O) device 132, and a global system for mobile communication (GSM) receiver 134. In some embodiments, the I/O device 132 includes a user interface. While the GNSS receiver 128, the IMU 130, and the GSM receiver 134 are illustrated on or in the engine compartment 108, the disclosure is not so limited. For example, the IMU 130 may be operably coupled to a chassis 142 of the vehicle 100, and one or both of the GNSS receiver 128 and the GSM receiver 134 may be operably coupled to the vehicle 100 at other locations.

The imaging controller 120 may be in operable communication with the one or more additional controllers 126 configured to perform one or more control operations of the vehicle 100, such as one or more navigation controls (e.g., control of steering, acceleration, velocity, braking, and/or navigation of the vehicle 100). The imaging controller 120 may be configured to facilitate one or more safe operations of the vehicle 100. For example, the imaging controller 120 may be configured to facilitate object avoidance of objects identified based on data from vision system 112 (e.g., from one or more cameras 115 of at least one of the image collection units 114 and the LiDAR sensor 116 of the at least one image collection unit 114), to perform autonomous vehicle operation, to perform a leader-follower operation, to provide a display of the surroundings of the vehicle 100 to the I/O device 132, and to provide analyzed image and LiDAR data (e.g., fused data) to a remote location for remote planning, for example.

The imaging controller 120 may be in operable communication with the cameras and the LiDAR sensor of each image collection unit 114, such as by wired or wireless communication. The imaging controller 120 may be configured to receive the image data from each of the cameras and the LiDAR data (e.g., the LiDAR point cloud) from the LiDAR sensor.

The one or more additional controllers 126 may include one or more of a speed controller, a track adjustment controller, a height adjustment controller, and a controller for facilitating one or more agricultural operations (e.g., a planting operation, a spreading operation, a spraying operation, a bailing operation, a cutting operation, a harvesting operation, or another operation).

In some embodiments, the GNSS receiver 128 includes a global positioning system (GPS) receiver. The GNSS receiver 128 may be configured for determining a position of the vehicle 100 during operation of the vehicle 100 (e.g., during traversal of the ground 102 with the vehicle 100 and/or during capturing of image data with the cameras and capturing of LiDAR data with the LiDAR sensor.

The IMU 130 may be operably coupled to the vehicle 100, such as to a chassis 142 of the vehicle 100. The computing device 118 may be in operable communication with and configured to receive data from the IMU 130. The IMU may be configured to measure one or more of a specific force, an angular rate, and an orientation of the vehicle 100 and may include at least one of each of an accelerometer, a gyroscope, and a magnetometer. The IMU 130 may be configured to facilitate determining one or more of a linear acceleration of the vehicle 100, a direction of travel of the vehicle 100, rotational rates and angular velocity, and a strength and direction of a magnetic field. In some embodiments, each of three mutually orthogonal axes (e.g., the pitch, roll, and yaw) of the vehicle 100 include an accelerometer, a gyroscope, and a magnetometer.

The I/O device 132 may include one or more devices configured to receiving a user input (e.g., from an operator) of the vehicle 100 and may include one or more of a keyboard, mouse, microphone, remote control device, button, joystick, trackball, touchpad, lightpen, a speaker, and display device. The I/O device 132 may be configured to receive a user input from the operator of the vehicle 100 and/or to provide one or more displays to the user.

The GSM receiver 136 may include a digital mobile network and may facilitate digital communications between the vehicle 100 (e.g., the computing device 118, the imaging controller 120, and the one or more additional controllers 126).

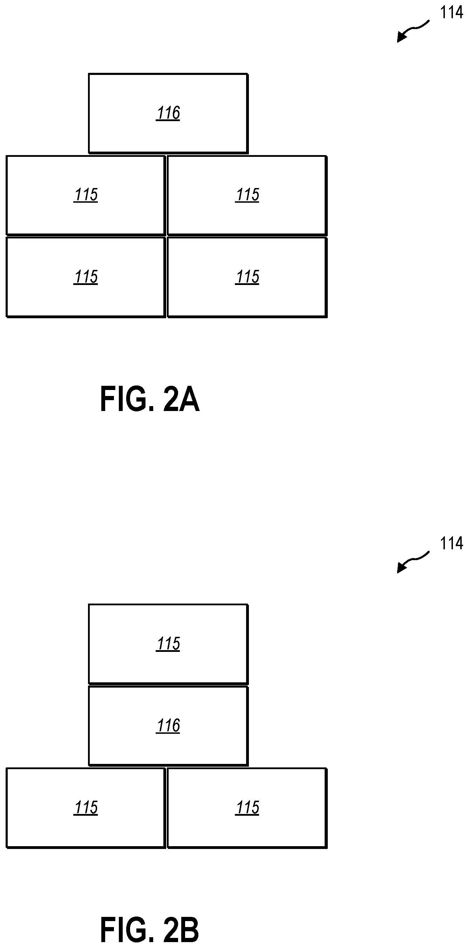

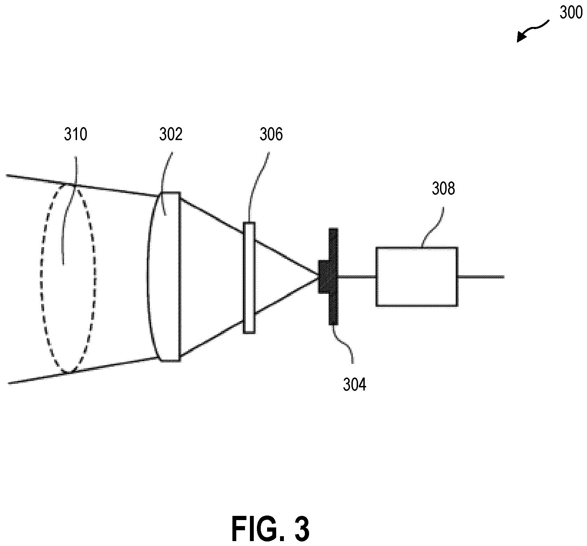

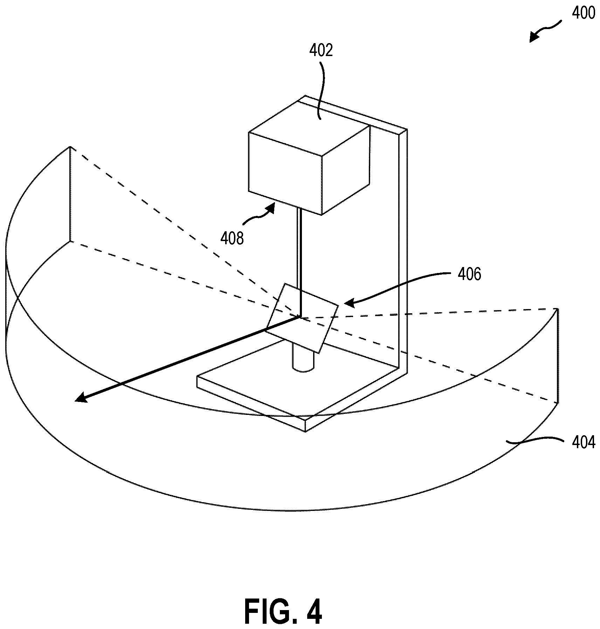

In some embodiments, an object 144 (which may also be referred to as an "alignment object" or a "reference object") may be located on the vehicle 100 and may include a reference for alignment of data from the cameras 115 and the LiDAR sensor 116. In some embodiments, the object 144 is located on the ground 102. In other embodiments, the object 144 is fixedly coupled to the vehicle 100 and in the FOV of at least one camera 115 and at least one LiDAR sensor 116. FIG. 2A is a simplified schematic illustration of one of the image collection units 114, in accordance with one or more embodiments of the disclosure. Each image collection unit 114 may include one or more cameras 115 and one or more light detection and ranging (LiDAR) sensors 116. The cameras 115 and the LiDAR sensor 116 are described in further detail with respect to FIG. 3 and FIG. 4, respectively. In some embodiments, the image collection unit 114 includes one LiDAR sensor 116 and multiple cameras 115. In some embodiments, each camera 115 and the LiDAR sensor 116 are oriented (e.g., face) in the same direction and have substantially the same pose. In some embodiments, the LiDAR sensor 116 is configured to scan around an entirety of the vehicle 100 and has a 360° field of view.

In some embodiments, a field of view (FOV) of each camera 115 may be the same as a FOV of one or more other cameras 115 (e.g., the FOV of each camera 115 may overlap one another). In other embodiments, the FOV of each camera 115 may be different than the FOV of the other cameras 115. In some embodiments, the FOV of at least one camera 115 (e.g., each camera 115) may at least partially overlap the FOV of at least another camera 115. For example, a first camera 115 may have a narrower FOV than a second camera 115. As described herein, a camera 115 with a narrower FOV than another camera 115 may exhibit a greater resolution (e.g., a greater pixel density) than the other camera 115. In some embodiments, the FOV of each individual camera 115 is less than the FOV of the LiDAR sensor 116.

A FOV of each camera 115 may be within a range of from about 60° to about 360°, such as from about 60° to about 90°, from about 90° to about 120°, from about 120° to about 180°, or from about 180° to about 360°. In some embodiments, a FOV of one of the cameras 115 is within a range of from about 60° to about 70°, and a FOV of at least another of the cameras 115 is within a range of from about 190° to about 195°. However, the disclosure is not so limited and the FOV of the cameras 115 may be different than those described.

The cameras 115 may individually be configured to capture image data. The image data may be grayscale image data, color image data (e.g., in the RGB color space), or multispectral image data. The cameras 115 may individually include one or more of a 2D-camera, a stereo camera, a time-of-flight (ToF) camera configured to capture 2D and/or 3D image data. In some embodiments, a ToF camera may facilitate determining depth information and improve an accuracy of image data and object pose determination based on the image data received by the camera 115.

In some embodiments, the cameras 115 are individually configured to capture 3D image data and may include, for example, a stereo camera. In other embodiments, the cameras 115 are individually configured to capture 2D image data. The cameras 115 may include one or more of a red, green, blue (RGB) camera, a RGB-IR camera (configured to provide visible images and thermal (e.g., IR) images), a charge-coupled device (CCD) camera, a complementary metal oxide semiconductor (CMOS) image sensor, a stereoscopic camera, a monoscopic camera, a short-wave infrared (SWIR) camera (e.g., configured to capture electromagnetic radiation (e.g., light) having a wavelength within a range of from about 0.4 µm to about 2.5 µm, such as from about 0.9 µm to about 1.7 µm or from about 0.4 µm to about 1.9 µm), or a digital single-reflex camera.

In some embodiments, the image collection unit 114 includes at least one RGB camera 115, at least one SWIR camera 115, and at least one LWIR camera 115. The SWIR camera 115 and the LWIR camera 115 may be configured to capture image data through smoke, fog, and snow. In some embodiments, at least one camera 115 includes an RGB-SWIR line scan camera (a 4-sensor RGB SWIR line scan camera). In some embodiments, at least one camera 115 is configured to capture RGB image data, SWIR data, long-wave IR (LWIR) data, and/or near-infrared (NIR) data.

Each camera 115 may be configured to capture image data at a frame rate within a range of from about 10 Hz to about 30 Hz. In some embodiments, the frame rate of each camera 115 is substantially the same. However, the disclosure is not so limited, and the frame rate of the cameras 115 may be different than that described.

Each camera 115 of the vision collection units 114 may be substantially the same, or one or more of the cameras 115 may be different than at least another of the cameras 115. For example, in some embodiments, the vision collection unit 114 includes two RGB cameras 115, and one or both of a SWIR camera 115, and a LWIR camera 115. The two RGB cameras 115 may have a different FOV, which may or may not overlap one another. In other embodiments, the two RGB cameras 115 have the same FOV, which may or may not at least partially overlap one another.

The LiDAR sensor 116 may directly neighbor one or more of the cameras 115. For example, the LiDAR sensor 116 may vertically overlie the cameras 115, may vertically underlie the cameras 115, may be vertically between the cameras 115, and/or may be located on a lateral side of one or more of the cameras 115. With reference to FIG. 2A, in some embodiments, the LiDAR sensor 116 vertically overlies the cameras 115, and the SWIR camera 115 and the LWIR camera 115 vertically underlie the RGB cameras 115. In other embodiments, the vision collection unit 114 includes three cameras 115 vertically underlying the LiDAR sensor 115, such as two RGB cameras 115 and one of a SWIR camera 115 and a LWIR camera 115. In some such embodiments, the SWIR camera 115 or the LWIR camera 115 vertically underlies the RGB camera 115 with a greater FOV than the other RGB camera 115; or the RGB cameras 115 have a same FOV and the SWIR camera 115 or the LDIR camera 115 is centered with respect to the RGB cameras 115.

FIG. 2B is a simplified schematic illustration of one of the image collection units 114, in accordance with one or more embodiments of the disclosure. With reference to FIG. 2B, in some embodiments, the LiDAR sensor 116 may be vertically between the cameras 115.

FIG. 3 is a simplified schematic illustration of a camera 300, in accordance with one or more embodiments of the disclosure. The camera 300 may correspond to the cameras 115 of the vision collection units 114. The camera 300 may include at least one optical lens 302, an optional filter 304, a detector 306 (also referred to as a "camera sensor"), and processing circuitry 308. The optical lens 302 may collect and direct light from a field of view 310 of the camera 300 through the optical filter 304 to the detector 306. The at least one optical lens 302 may include a fisheye lens, an f-theta lens, a rectilinear lens, or any other type of standard (e.g., a lens with a focal length approximately equal to the diagonal of the detector 306 and providing a field of view 310 representative of what is seen by human eyes) or wide-angle lens (e.g., a lens having a shorter focal length than standard lenses, typically ranging from 24 mm to 35 mm for full-frame cameras and providing a wider field of view 310 than standard lenses and configured to capture a wider FOV than a standard lens). The optional filter 304 may be configured to allow selected spectral bands of electromagnetic radiation (e.g., ultraviolet, infrared, etc.) to pass therethrough, while filtering other spectral bands of electromagnetic radiation from passing therethrough. The detector 306 may include a digital image sensor configured to convert electromagnetic energy to an electric signal and may include image sensing technology such as charge-coupled device (CCD) technology, complementary metal oxide semiconductor (CMOS) technology, or other type of sensor. The detector 306 may be configured to detect a narrow range of wavelengths (e.g., a monochromatic camera sensor) of light, a broad range of wavelengths (e.g., a broad-spectrum camera sensor) or a plurality of ranges of wavelengths of light (e.g., a multi-spectrum camera sensor). For example, the detector 306 may detect visible light, near infrared (NIR) light, mid-infrared (MIR) light, far infrared (FIR) light, ultraviolet (UV) light, light from other portions of the electromagnetic spectrum, or combinations thereof. The processing circuitry 308 may include a circuitry for amplifying and processing the electric signal generated by the detector 306 to generate image data, which is passed to the one or more computing devices, such as the computing device 118. In some embodiments, the camera 300 includes an f-theta lens such that the camera 300 generates image data including an angle, which may correspond to an angle of LiDAR data generated with the LiDAR sensor 116.

FIG. 4 is a simplified perspective view of a LiDAR sensor 400, in accordance with one or more embodiments of the disclosure. The LiDAR sensor 400 may be configured to direct a light source 402 across a LiDAR FOV 404 with a scanner 406. The light source 402 may be a monochromatic or broad-spectrum light source. For example, the light source 402 may be a laser light source. The light source 402 may provide visible light, near infrared (NIR) light, mid-infrared (MIR) light, far infrared (FIR) light, ultraviolet (UV) light, light from other portions of the electromagnetic spectrum, or combinations thereof.

The scanner 406 may include a mirror or prism that alters a direction of the light from the light source 402. The scanner 406 may rotate through a full 360° rotation, while the light is emitted from the light source 402 (and not occluded by another portion of the LiDAR sensor 400) in the LiDAR FOV 404. In other examples, the scanner 406 oscillates to emit the light in the LiDAR FOV 404. The scanner 406 may include a first mirror that oscillates in a first direction (e.g., in the direction of the lateral width of the LiDAR FOV 404) and a second mirror that oscillates in a second direction at least partially orthogonal to the second direction (e.g., in the direction of the vertical height of the LiDAR FOV 404). For example, a microelectromechanical system (MEMS) scanner may control the orientation of the mirror(s). The scanner 406 may include a dual axis mirror that oscillates in both the first direction and the second direction. In some embodiments, the scanner 406 includes a phased array of light sources 402 that further allows for scanning and/or replaces the rotating or oscillating scanner 406. In other embodiments, the LiDAR FOV 404 may be within a range of from about 180° to about 190°. In some embodiments, the LiDAR FOV 404 is about 190°. However, the disclosure is not so limited, and the LiDAR FOV 404 may be different than those described.

The LiDAR sensor 400 may further include a photodetector 408 configured to detect the light from the light source 402 that is scattered and/or reflected by objects in the environment back to the LiDAR sensor 400 (e.g., to the photodetector 408). The detected light measured by the photodetector 408 may be referred to as LiDAR data. In some embodiments, the photodetector 408 includes a photodiode or photomultiplier. The photodetector 408 may be an active sensor integrated with the light source 402. In other examples, the photodetector 408 is separate from the light source 402 and the backscattered light is received through a hole or beam splitter of the scanner 406.

As described above, the LiDAR sensor 400 may be configured to receive (e.g., measure, detect) LiDAR data based on the electromagnetic radiation detected with the LiDAR sensor 400 (e.g., with the photodetector 408). In some embodiments, the LiDAR sensor 400 generates a LiDAR point cloud based on the detected light. The LiDAR point cloud may be a 3D LiDAR point cloud and may simply be referred to herein as a "3D point cloud." In other embodiments, the LiDAR point cloud is a 2D LiDAR point cloud.

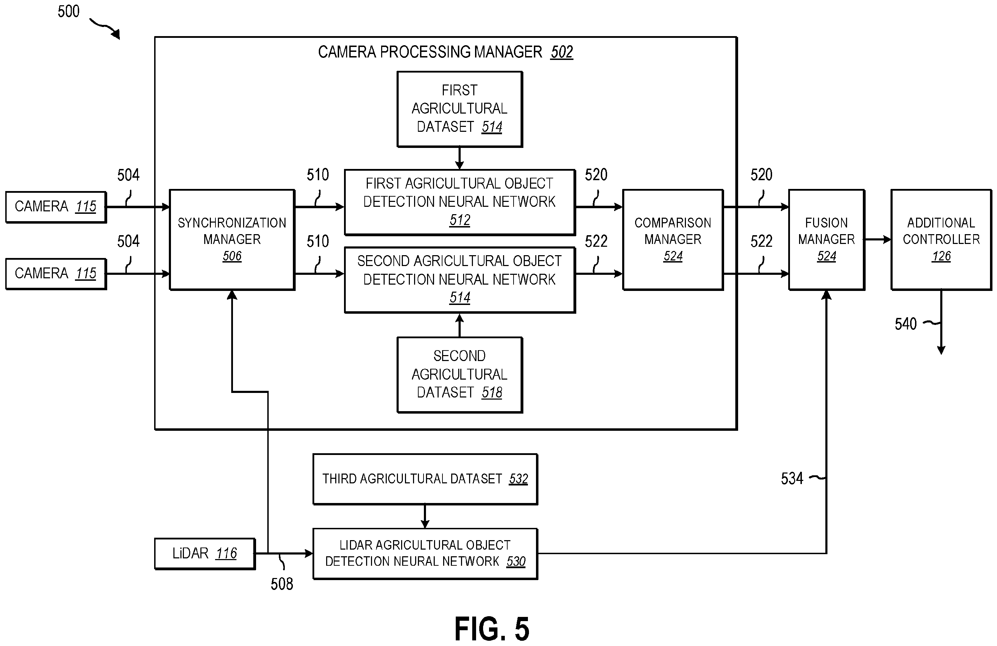

FIG. 5 is a simplified schematic of an imaging 500, in accordance with embodiments of the disclosure. The imaging controller 500 may correspond to the imaging controller 120 of FIG. 1 and may include a camera processing manager 502 configured to process the image data from the camera 115 to a suitable form for fusion with LiDAR data. The camera processing manager 502 further includes a synchronization manager 506, a first agricultural object detection neural network 512 trained with a first agricultural dataset 514, a second agricultural object detection neural network 516 trained with a second agricultural dataset 518, and an image comparison manager 524. The imaging controller 500 further includes a LiDAR object detection neural network 530 trained with a third agricultural dataset 532 and a fusion manager 526.

The camera processing manager 502 may be configured to receive image data 504 from multiple cameras 115, such as multiples cameras 115 of an image collection unit 114. The image data 504 may be timestamped using a precision time protocol (PTP), such as with clocks located on the computing device 118 (FIG. 1). In some embodiments, each camera 115 is configured to capture the image data 504 at substantially the same time. In other embodiments, each camera 115 captures image data 504 at different times (e.g., the cameras 115 are independently triggered such that image data 504 from each camera 115 is staggered). The FOV of each camera 115 may be substantially the same (e.g., the FOV of each camera 115 may overlap), or the FOV of each camera 115 may be different than the FOV of other cameras 115 (e.g., the FOV of each camera 115 is substantially completely different, or the FOV of each camera 115 partially overlaps the FOV of another camera 115 but extends beyond the FOV of the other camera 115 in at least one direction). In some embodiments, the cameras 115 may be substantially the same (e.g., have the same types of lenses, be oriented in the same direction, have the same pose). In some embodiments, at least one camera 115 has a narrower FOV than at least another camera 115.

The synchronization manager 506 receives the image data 504 from each camera 115. In some embodiments, the synchronization manager 506 receives LiDAR data 508 from the LiDAR sensor 116. The synchronization manager 506 may be configured to synchronize the image data 504 from each camera 115 with image data 504 from other cameras 115 and with the LiDAR data 508. For example, in use and operation, the LiDAR sensor 116 rotates (e.g., the scanner 406 (FIG. 4) rotates)) and captures the LiDAR data 508. The synchronization manager 506 may be configured to synchronize the cameras 115 to capture the image data 504 at times corresponding to when the FOV of the LiDAR sensor 116 is scanning within the FOV of the camera 115. In embodiments where the frame rate of the cameras 115 is different than (e.g., lower than) the scan rate of the LiDAR sensor 116, the synchronization manager 506 is configured to interpolate position estimates of objects in the image data 504 at times that correspond to the time when the LiDAR sensor 116 is scanning in the FOV of the camera 115. By way of non-limiting example, the synchronization manager 506 may be configured to interpolate the image data 504 from one or more (e.g., each) of the cameras 115 between LiDAR sensor scans in a FOV corresponding to the respective one or more cameras 115 using one or more advanced interpolation techniques, such as optical flow methods (e.g., the Lucas-Kanade method or Gunnar-Farneback) for computer vision, Kalman filtering, or deep neural network-based (DNN-based) trackers. In other words, the synchronization manager 506 may be configured to provide an estimate of the location of each object in the image data at times between image frames of the image data 504 to correspond to the LiDAR data 508 and the scan rate of the LiDAR sensor 116. Accordingly, the synchronization manager 506 may facilitate use of image data 504 with cameras 115 having a frame rate less than the scan rate of the LiDAR sensor 116, effectively increasing the frame rate of the cameras 115 to match the scan rate of the LiDAR sensor 116.

The synchronization manager 506 is configured to generate synchronized image data 510. The first agricultural object detection neural network 512 and the second agricultural object detection neural network 516 may individually receive the synchronized image data 510 of respective cameras 115 and generate respective first labeled image data 520 and second labeled image data 522.

The first agricultural object detection neural network 512 may be trained with a first agricultural dataset 514. The first agricultural dataset 514 may include image data including ground truth data with respect to agricultural objects and/or animals that may be encountered in a field during performance of one or more agricultural operations (e.g., during one or more of baling, planting, spraying, spreading, harvesting, cutting, swathing, tilling). The agricultural objects may include moving objects (e.g., one or more a tractor, implement (tillage implement), combine, forager, combine header, combine trailer, forage header, front loader, planter and seeder, harrow, plough, swather, tedder, rake, mower, fertilizer spreader, sprayer, potato digger), a static object (e.g., one or more of a bale (a square bale, a round bale), a stack of crops, a pole (e.g., a fence pole, a utility pole, an electric pole) a windturbine, a rock (e.g., a boulder, a stone), vegetation (e.g., trees, weeds, bushes), and a building (e.g., farm, house, barn, shed, silo). The objects may include be living objects, such as humans (e.g., adult, infant, toddler, child, adolescent, adult), and animals (e.g., fawn, bird, cat, dog, cow, sheep, horse, fox, rabbit, deer, pig, goat). The first agricultural dataset 514 may include ground truth for classifying each of the agricultural objects, whether moving, static, and/or living.

The first agricultural dataset 514 may include image data and ground truths for agricultural objects found in agricultural environments. In addition, the first agricultural dataset 514 may include training data and associations for agricultural objects. By way of non-limiting example, the first agricultural dataset 514 may include associations between towed implements (e.g., planters, tillage implements) and self-propelled vehicles (e.g., a tractor) that tow the towed implements; animals and associated movements, poses, and speeds; whether one object is trailing another, such as in a leader-follower arrangement, and trajectories conventionally encountered by the agricultural objects.

The first agricultural object detection neural network 512 may include a deep neural network (DNN), such as a deep convolutional neural network. The neural network 210 may include one or more object detection algorithms, object tracking algorithms, and/or object detection and tracking algorithms, such as one or more of YOLOv3, YOLOv5, YOLOv8, Faster R-CNN, Simple Online and Realtime Tracking (SORT), DeepSORT, FairMOT, TransMOT, ByteTrack, or another object detection and object tracking neural network. Of course, the first neural network 512 may include one or more other object detection and tracking algorithms and/or separate algorithms for object detection and object tracking. In some embodiments, the first agricultural object detection network 512 generates a bounding box around the detected objects and classifies one or more (e.g., each) objects in the first labeled image data 520.

The second agricultural object detection neural network 516 may be trained with a second agricultural dataset 518. The second agricultural dataset 518 may include image data including ground truth data with respect to agricultural objects and/or animals that may be encountered in a field during performance of one or more agricultural operations. In some embodiments, the second agricultural dataset 518 is substantially the same as or similar to the first agricultural dataset 514. In some embodiments, the second agricultural dataset 518 includes image data including ground truth data for agricultural objects. The image data of the second agricultural dataset 518 may be different than the image data and/or the ground truth data of the first agricultural dataset 514. For example, the image data and/or the ground truth data of the second agricultural dataset 518 may include image data from a different type of camera 115 than the image data of the first agricultural dataset 514.

The second agricultural object detection neural network 516 may be substantially similar to the first agricultural object detection neural network 512 and configured to perform one or more of the same object detection and tracking algorithms as the first agricultural object detection neural network 512. However, in some embodiments, the second agricultural object detection neural network 516 may be trained to perform one or more object detection and tracking operations on image data from a different type of camera 115 than the first agricultural object detection neural network 512.

In some embodiments, each of the first agricultural object detection neural network 512 and the second agricultural object detection neural network 516 are configured to perform one or more object segmentation operations on the synchronized image data 510. The object segmentation operation may be selected from semantic segmentation, instance segmentation, and panoptic segmentation. In some embodiments, the object segmentation operation is instance segmentation, wherein instances of objects (whether or not the type of object is the same as another identified object) are provided with a unique label (e.g., identifier, tag) (also referred to as an "object label"). In some such embodiments, the first labeled image data 520 and the second labeled image data 522 individually include labeled objects. In some embodiments, the first labeled image data 520 and the second labeled image data 522 individually include labeled image data including segmented image data. Pixels defining the labeled objects may include metadata including the image data (e.g., RGB image data, SWIR image data, LWIR image data, a timestamp, an object label, and an instance label).

In some embodiments, each of the first agricultural object detection neural network 512 and the second agricultural object detection neural network 516 may be configured to associate types of objects together (e.g., a self-propelled vehicle with a towed implement), such as objects that are conventionally in a leader-followed configuration (e.g., where a second object trails (follows) a first object). In some embodiments, each of the first agricultural object detection neural network 512 and the second agricultural object detection neural network 516 may be selected by the imaging controller 500 (or the computing device 118) based on the type of agricultural operating being performed.

While FIG. 5 illustrates that the camera processing manager 502 includes separate object detection neural networks 512, 514 for receiving the synchronized image data 510 and generating the labeled image data 520, 522, the disclosure is not so limited. In other embodiments, a single object detection neural network receives the synchronized image data 510 from each camera 115 and/or from the synchronization manager 506 and generates the labeled image data 520, 522.

With continued reference to FIG. 5, in some embodiments (e.g., such as when at least a portion of the FOV of a camera 115 overlaps at least a portion of the FOV of another camera 115), the camera processing manager 502 may include the image data comparison manager 524, which may receive the each of the labeled data 520, 522 from the respective first agricultural object detection neural network 512 and the second agricultural object detection neural network 516. The image data comparison manager 524 may be configured to compare pixels (or objects or any pixels of the objects) of the first labeled image data 520 and the second labeled image data 522 and determine whether such pixels differ from one another and generate flags in each of the first labeled image data 520 and the second labeled image data 522 for pixels that do not match one another; and/or to determine which pixels from of the first labeled image data 522 and the pixels of the second labeled image data 522 have a greater resolution (e.g., which pixels have a greater density), which may correspond to the labeled image of the camera 115 having the more narrow FOV).

For example, when capturing image data of moving objects, the so-called "parallax" effect may result in distortion of the image data, such as misalignment of the image data. For example, the parallax effect may motion in the foreground and the background appear to move at different speeds. In some embodiments, the image data comparison manager 524 provides an indication (e.g.. a flag, a comparison) in each pixel of the first labeled image data 520 and the second labeled image data 522 indicative of whether or not the pixel agrees with a corresponding pixel in the other of the first labeled image data 520 and the second labeled image data 522. In some such embodiments, the pixels of the first labeled image data 520 and the second labeled image data 522 individually include, for example, RGB image data, SWIR image data, LWIR image data, a timestamp, an object label, and an indication of whether or not the pixel matches a corresponding pixel of the other of the first labeled image data 520 and the second labeled image data 522.

In some embodiments, such as in embodiments where at least a portion of the FOV of a camera 115 overlaps with at least a portion of the FOV of another camera 115, the image data comparison manager 524 is configured to identify pixels in the overlapping regions having a greater resolution (e.g., a greater pixel density). In some such embodiments, the labeled data 520, 522 output from the data comparison manager 524 may include, in the metadata associated with each pixel thereof, an indication of which pixels are prioritized for fusion by the fusion manager 526 and/or which pixels should be fused by the fusion manager 526. In some such embodiments, the image data comparison manager 524 is configured to prioritize pixels of image data in the first labeled image data 520 and the second labeled image data 522 for overlapping field of view in the image data based on the resolution of such image data.

Still referring to FIG. 5, the imaging controller 500 may include a LiDAR agricultural object detection neural network 530 configured to receive the LiDAR data 508 from the LiDAR sensor 116. The LiDAR object detection neural network 530 may be trained with a third agricultural dataset 532 (which may also be referred to as a "LiDAR agricultural dataset"), which may include LiDAR data including ground truth data with respect to agricultural objects and/or animals that may be encountered in a field during performance of one or more agricultural operations. The third agricultural dataset 532 may include ground truth for classifying each of the agricultural objects, whether moving, static, and/or living. In some embodiments, the third agricultural dataset 532 includes training data and associations for the agricultural objects, as described above with reference to the first agricultural dataset 514 and the second agricultural dataset 518.

The LiDAR object detection neural network 530 may include a deep neural network (DNN), such as a deep convolutional neural network, such as one or more neural networks configured to perform one or more of object detection, object tracking, and object segmentation on the LiDAR data 508. By way of non-limiting example, the LiDAR object detection neural network 530 may include one or more of Complex-YOLO, YOLO3D, 3DFCN, HVNet, and VoxelNet. However, the disclosure is not so limited, and the LiDAR object detection neural network 530 may include one or more other machine learning models. In some embodiments, the LiDAR object detection neural network 530 is configured to perform an object segmentation operation on the LiDAR data 508, such as an instance segmentation operation on the LiDAR data 508.

The LiDAR object detection neural network 530 may analyze the LiDAR data 508 and generate labeled LiDAR data 534. In some embodiments, the labeled LiDAR data 534 includes labeled objects, such as instances of objects. In some embodiments, the labeled LiDAR data 534 includes a labeled 3D LiDAR point cloud. Each voxel in the labeled 3D LiDAR point cloud 534 may include metadata including one or more of (e.g., each of) depth (e.g., distance) information, elevational information, azimuth information, RGB data, an object label, and a timestamp.

The labeled LiDAR data 534 may be received by the fusion manager 526. The fusion manager 526 may be configured to receive the first labeled image data 520, the second labeled image data 522, and the labeled LiDAR data 534 and perform one or more fusion operations on the data to generate fused data 538.

The fusion manager 526 may be configured to project the labeled LiDAR data 534 onto the combined labeled image data (e.g., the first labeled image data 520 and the second labeled image data 522), such that the fused data 538 includes the combined labeled image data 520, 522 and the labeled LiDAR data 534 in 2D space. In other words, in some such embodiments, the fusion of the labeled LiDAR data 534 and the combined labeled image data 520, 522 occurs in 2D and labeled LiDAR data 534 is transposed into 2D space with the combined labeled image data 520, 522 and points in the labeled LiDAR data 534 are matched to bounding boxes of objects (e.g., instances of objects labeled with the first agricultural object detection neural network 512 and the second agricultural object detection neural network 516) in the combined labeled image data 520, 522. In some embodiments, the labeled LiDAR data 534 includes more sparse data compared to the combined labeled image data 520, 522. In some such embodiments, since the data fusion occurs in 2D, the data fusion may use less processing power and may process the data faster compared to other embodiments. By way of comparison, performing object detection on the labeled LiDAR data 534 in 3D and labeling the labeled LiDAR data 534 rather than the combined labeled image data 520, 522 (in 2D) may utilize more processing power compared to labeling the combined labeled image data 520, 522 in 2D.

Projecting the labeled LiDAR data 534 onto the combined labeled image data 520, 522 may include formatting and aligning the labeled LiDAR data 534 data with the combined labeled image data 520, 522, such as by aligning the timestamps of the labeled LiDAR data 534 and combined labeled image data 520, 522; transforming the 3D coordinates of the labeled LiDAR data 534 to 2D using, for example, a projection matrix to map the 3D points onto a 2D plane (e.g., such as perspective projection or orthographic projection); and applying the projection matrix to each point in the 3D labeled LiDAR data 534.

The labeled LiDAR data 534 may be projected onto the combined labeled image data 520, 522 with one or more fusion operations (e.g., fusion algorrithms), such as MV3D, AVOD, voxels such as VoxelNet, F-PointNet, MVFP, and raw point clouds such as PointNet, PointNet++, and PonitRCNN to convert the 3D data of the labeled LiDAR data 534 to a 2D plane representation, such as a range view, spherical view, cylindrical view, or a bird's-eye view (BEV) projection techniques.

In some embodiments, the fused data 538 includes the metadata of the combined labeled image data 520, 522 and the metadata of the labeled LiDAR data 534. By way of non-limiting example, each pixel of the fused data 538 may include one or more of (e.g., each of) RGB image data, SWIR image data, LWIR image data, a flag if pixels data from different cameras 115 do not agree, priority data for pixels within overlapping fields of view of the image data 504, depth (e.g., distance) data, elevational data, azimuth data, an object label (e.g., an instance label), association data, and a timestamp.

In some embodiments, the fused data 538 includes and corresponds to pixels of objects in the first labeled image data 520, the second labeled image data 522, and the labeled LiDAR data 534. In other words, pixels that do not include an object classification (e.g., an instance) are not included in the fused data 538. Stated another way, pixels of the background (not including objects) may be disregarded and may not be included in the fused data 538. By way of non-limiting example, LiDAR data 508 from the labeled LiDAR data 234 may be projected to the labeled image data 520, 522 and only pixels of the fused data 538 corresponding to the objects identified and classified in the labeled image data 520, 522 may be included in the fused data 538. In other words, in some such embodiments, the fused data 538 may include only pixels corresponding to bounding boxes of identified objects in the labeled image data 520, 522 and the corresponding data from the labeled LiDAR data 534.

While the fused data 538 has been described as including the LiDAR data 534 projected onto the combined labeled image data 520, 522, the disclosure is not so limited. In other embodiments, the fused data 538 includes the combined labeled image data 520, 522 projected onto the labeled LiDAR data 534 and the fusion manager 526 is configured to project the combined labeled image data 520, 522 to a 3D space on the labeled LiDAR data 534. By way of non-limiting example, bounding boxes of identified (and labeled) objects in the combined labeled image data 520, 522 may be projected (e.g., the corners of the bounding boxes may be projected) to obtain points in 3D space (referred to as "back projection") which define the vertices of a 3D frustum in the 3D (real world) coordinate system, corresponding to the labeled LiDAR data 534. In some embodiments, the 3D frustum may be defined based on the camera 115 parameters (e.g., the intrinsic and extrinsic parameters (e.g., the rotation and translation between the camera 115 and the world coordinates)). Each frustum corresponds to an object detected in the combined labeled image data 520, 522. The points inside each frustum may be analyzed to create smaller pieces of the point cloud, each piece containing 3D points corresponding to an object detected in the 2D image. However, the disclosure is not so limited and the combined labeled image data 520, 522 may be transposed to the 3D space of the labeled LiDAR data 534 by other methods.

The fusion manager 526 may be configured to perform one or more fusion operations on the labeled LiDAR data 534 and the combined labeled image data 520, 522 to generate the fused data 538. By way of non-limiting example, the fusion manager 526 may be configured to perform one or more of a Hungarian algorithm (also referred to as "Kuhns-Munkres algorithm" and implementing bipartite graph theory), a Bayesian estimation (Bayesian analysis (e.g., Bayes' theorem)) for sensor fusion, a Kalman filter, and Bipartite Graph Matching operation to match the LiDAR data (e.g., the labeled LiDAR data 534) with the image data (e.g., combined labeled image data 520, 522). However, the disclosure is not so limited, and the fusion manager 526 may perform the fusion operation by other methods to generate the fused data 538.

After generating the fused data 538 with the fusion manager 526, the fused data 538 may be received by an additional controller 126, which may generate a control signal 540 based on the fused data 538. For example, the imaging controller 500 may provide the fused data 538 to the additional controller 126 to facilitate control of one or more operations of the vehicle 100. By way of non-limiting example, based on the fused data 538 received by the additional controller 126, the vehicle 100 may be navigated by the one or more additional controllers 126 (e.g., by controlling one or more of the propulsion system, the steering system, the braking system, and the navigation system). In other embodiments, the fused data 538 may facilitate an autonomous harvesting operation.

In some embodiments, responsive to receiving the fused data 538, the one or more additional controllers 126 may perform an object avoidance operation to avoid one or more of the instances of objects in the fused data 538. In some embodiments, the fused data 538 is received by the I/O device 132 and displayed on a display of the I/O device 132. The operator of the vehicle 100 may view the displayed fused data 538 to facilitate navigation of the vehicle 100 using real-time data.

In some embodiments, the computing device 118 provides the fused data 538 to a server (e.g., a remote server), where the fused data 538 may be used for remote planning operations. For example, the fused data 538 may include identification of objects (e.g., locations, such as GPS coordinates) present in a field. The objects may include one or more static objects, such as one or more of windmills, rocks, boulders, obstructions in the field, buildings, trees, and other objects. In some embodiments, the objects include plants, and may include a status of crops (e.g., a stage of growth of the crops) and may be analyzed remotely to predict a time when the crops should be harvested.

The imaging controller 500 may facilitate safe operation of the vehicle 100. In some embodiments, the imaging controller 500 facilitates autonomous operation of the vehicle 100 (e.g., for obstacle avoidance), assisted operation by relaying the fused data 538 to a display (e.g., to the I/O device 132, such as to a display of the I/O device 132), or remote planning for future operations.

While the imaging controller 500 has been described and illustrated as including two cameras 115, the disclosure is not so limited. For example, as described above with reference to FIG. 2A and FIG. 2B, the imaging controller 500 may include one or more image collection units 114, each individually including two or more cameras 115 (e.g., three cameras 115, four cameras 115). In some such embodiments, the synchronization manager 506 may synchronize image data 504 from each camera 115; the comparison manager 524 may compare the pixels of the image data from different agricultural object detection neural networks 512, 514; and the fusion manger 526 may fused the labeled image data from multiple cameras 115 with the labeled LiDAR data 534.

While the first agricultural object detection neural network 512 and the second agricultural object detection neural network 516 have been described and illustrated as optionally performing an object segmentation operation on the synchronized image data 510; and the LiDAR agricultural object detection neural network 530 as optionally performing an object segmentation operation on the LiDAR data 508, the disclosure is not so limited. In other embodiments, the imaging controller 500 includes an agricultural object segmentation manager configured to perform one or more object segmentation operations on the fused data 538 and generate segmented fused data. The agricultural object segmentation manager may include an agricultural object segmentation neural network trained with an additional agricultural dataset including fused data (image data and LiDAR data). In some such embodiments, the segmented fused data may be received by the additional controller 126.

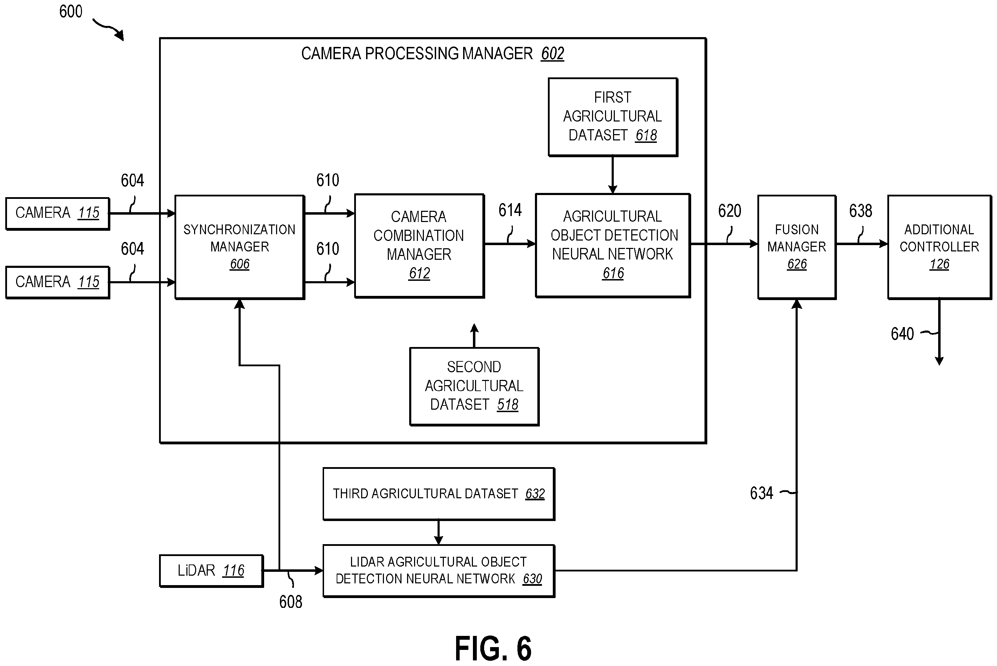

Although the imaging controller 500 has been described and illustrated as analyzing the image data 504 from each camera 115 separately with the first and second agricultural object detection neural networks 512, 516, the disclosure is not so limited. In other embodiments, the image data from each camera 115 may not be analyzed separately by an agricultural object detection neural network. FIG. 6 is a simplified schematic of the imaging controller 600, in accordance with embodiments of the disclosure. The imaging controller 600 may replace the imaging controller 120 of FIG. 1. The imaging controller 600 may be substantially the same as the imaging controller 120 described with respect to FIG. 5, except that the imaging controller 600 may include a camera combination manager 612 configured to combine image data from each camera 115 and generated combined image data 614.

With reference to FIG. 6, the imaging controller 600 includes a camera processing manager 602 configured to process image data 604 from the cameras 115 to a suitable form with LiDAR data 608, as described above with reference to FIG. 5. The camera processing manager 602 further includes a synchronization manager 606, a camera combination manager 612, and an agricultural object detection neural network 616 trained with a first agricultural dataset 618. The imaging controller 600 may further include a LiDAR agricultural object detection neural network 630 trained with a LiDAR agricultural dataset 632 and a fusion manager 626 configured to fuse data from the LiDAR agricultural object detection neural network 630 and from the camera processing manager 602.

The synchronization manager 606 may be configured to receive image data 604 from each camera 115 and LiDAR data 608 from the LiDAR sensor 116 and synchronize the image data 604 with the LiDAR data 608, as described above with reference to the synchronization manager 506. Each of the synchronization manager 606, the image data 604, and the LiDAR data 608 may be substantially the same as the respective synchronization manager 506, the image data 504, and the LiDAR data 508 described above with reference to FIG. 5.

With continued reference to FIG. 6, the synchronization manager 606 may be configured to generate synchronized image data 610, which may be substantially the same as the synchronized image data 510 described above with reference to FIG. 5. The synchronized image data 610 may be received by the camera combination manager 612, which may be configured to combine the synchronized image data 610 from each camera 115 and generated combined image data 614.

The camera combination manager 612 may receive the synchronized image data 610 from the synchronization manager 606 and may combine the image data to generate the combined image data 614 (also referred to herein as a "virtual camera data" or "virtual image data"). In some embodiments, a FOV of the combined image data 614 is greater than the FOV of each of the cameras 115 from which the image data 604 is used to generate the combined image data 614. In some embodiments, the FOV of the combined image data 614 corresponds to (and is substantially the same as) the FOV of the LiDAR sensor 116.

The camera combination manager 612 may be configured to perform one or more sensor fusion operations on the image data (e.g., the synchronized image data 610). The sensor fusion operation may include a Kalman filter operation (e.g., an optimal Kalman filter and an extended Kalman filter (EKF)), or another sensor fusion operation. In some embodiments, combining the synchronized image data 610 from each camera 115 may reduce the so-called parallax effect.

The camera combination manager 612 may be substantially similar to the system described in GB 2305023.0, "Camera System and Method for Generating a Combined Image Projection," filed April 4, 2023, the disclosure of which is incorporated in its entirety herein. For example, the camera combination manager 612 may be configured to stitch image data from each camera 115 to generate the combined image data 614 based on the image data 604 from each of the cameras 115. By way of non-limiting example, the combined image data 614 may be generated by capturing the image data 604 with each camera 115; determining the orientation of the image data 604 from each camera 115 relative to the orientation of the image data 604 from at least another camera 115; generating an image projection based on the image data 604 from each camera 115; determining common image content in the image projections from each camera 115 to form a combined image projection; aligning the image data 604 from each camera 115; overlapping the image data 604 from each camera 115 by overlapping common image content; determining a resolution value for each of the overlapping pixels; selecting pixels in the common image content based on the resolution values of the pixels; and combining the image data 604 from each camera 115 to form combined image 614 data based at least in part on the resolution values of the pixels of the common image content. The position of the cameras 115 may be calibrated relative to a reference marker and/or relative to one another, as described in the above-referenced application. Accordingly, the camera combination manager 612 may stitch the image data 604 from each of the cameras 115 to generate the combined image data 614. In some embodiments, the combined image data 614 corresponds to a FOV of the LiDAR sensor 116.

The combined image data 614 may be received by the agricultural object detection neural network 616, which may be configured to analyze the combined image data 614, such as by performing one or more object detection, object tracking, and object segmentation operations on the combined image data 614 to generate labeled image data 620, as described above with reference to the first agricultural object detection neural network 512 and the first labeled image data 520. For example, the agricultural object detection neural network 616 may be configured to receive the combined image data 614 and generate the labeled image data 620, which may include labels (e.g., instances of objects) for objects identified in the combined image data 614.

The agricultural object detection neural network 616 may be trained with a first agricultural dataset 618. The agricultural object detection neural network 616 and the first agricultural dataset 618 may be substantially the same as the respective first agricultural object detection neural network 512 and the first agricultural dataset 514 described above with reference to FIG. 5.

With continued reference to FIG. 6, a LiDAR agricultural object detection neural network 630 is configured to receive LiDAR data 608 from the LiDAR sensor 116 and generate labeled LiDAR data 634, as described above with reference to the LiDAR agricultural object detection neural network 630. The LiDAR agricultural object detection neural network 630 may be trained with a second agricultural dataset 632, which may include training data including ground truth data for agricultural objects in LiDAR data. Each of the LiDAR agricultural object detection neural network 630, the second agricultural dataset 632, and the labeled LiDAR data 634 may be the same as the respective LiDAR agricultural object detection neural network 530, the third agricultural dataset 532, and the labeled LiDAR data 534 described above with reference to FIG. 5.

With continued reference to FIG. 6, the fusion manager 626 may receive the labeled image data 620 and the labeled LiDAR data 634 and generate fused data 638, as described above with reference to the fusion manager 526 of FIG. 5. The fusion manager 626 may be substantially the same as the fusion manager 526. The fused data 638 may include data (e.g., metadata) from each of the cameras 115 (e.g., the image data 604), the agricultural object detection neural network 616 (e.g., the labeled image data 620), the LiDAR sensor 116 (e.g., the LiDAR data 608), and the LiDAR agricultural object detection neural network 630 (e.g., the labeled LiDAR data 634). By way of non-limiting example, pixels of the fused data 638 may include one or more of (e.g., each of) RGB image data, SWIR image data, LWIR image data, depth (e.g., distance) data, elevational data, azimuth data, an object label (e.g., an instance label), association data, and a timestamp.

After generating the fused data 638 with the fusion manager 626, the fused data 638 may be received by an additional controller 126, as described above with reference to FIG. 5. For example, the imaging controller 600 may provide the fused data 638 to the additional controller 126 to generate a control signal 640 based on the fused data 638. The control signal 640 may be configured to facilitate control of one or more operations of the vehicle 100. By way of non-limiting example, based on the fused data 638 received by the additional controller 126, the vehicle 100 may be navigated by the one or more additional controllers 126 (e.g., by controlling one or more of the propulsion system, the steering system, the braking system, and the navigation system), the fused data 636 may be displayed to an operator in the operator cabin 106 (e.g., such as on the I/O device 132), and/or the fused data 638 may be used in a remote planning operation, as described above with reference to the fused data 538.

In some embodiments, generating the combined image data 614 with the camera combination manager 612 and performing the object detection on the combined image data 614 with the agricultural object detection neural network 616 may increase the processing speed of the camera processing manager 602, facilitating faster operation of the imaging controller 600 and control of the vehicle 100 during use and operation compared to embodiments in which the image data from each camera is individually analyzed with a neural network. For example, the imaging controller 600 may be more responsive during use and operation and may facilitate improved operation (e.g., navigation, autonomous driving, automated harvesting, display of fused data to an operator) during use and operation of the vehicle 100.

In addition, as described above with reference to FIG. 5, although the agricultural object detection neural network 616 and the LiDAR agricultural object detection neural network 630 have individually been described as configured to perform one or more object segmentation operations on the respective combined image data 614 and the LiDAR data 608, the disclosure is not so limited. In other embodiments, the imaging controller 600 includes an agricultural object segmentation manager configured to perform one or more object segmentation operations on the fused data 638 and generate segmented fused data. The agricultural object segmentation manager may include an agricultural object segmentation neural network trained with an additional agricultural dataset including fused data (image data and LiDAR data). In some such embodiments, the segmented fused data may be received by the additional controller 126.

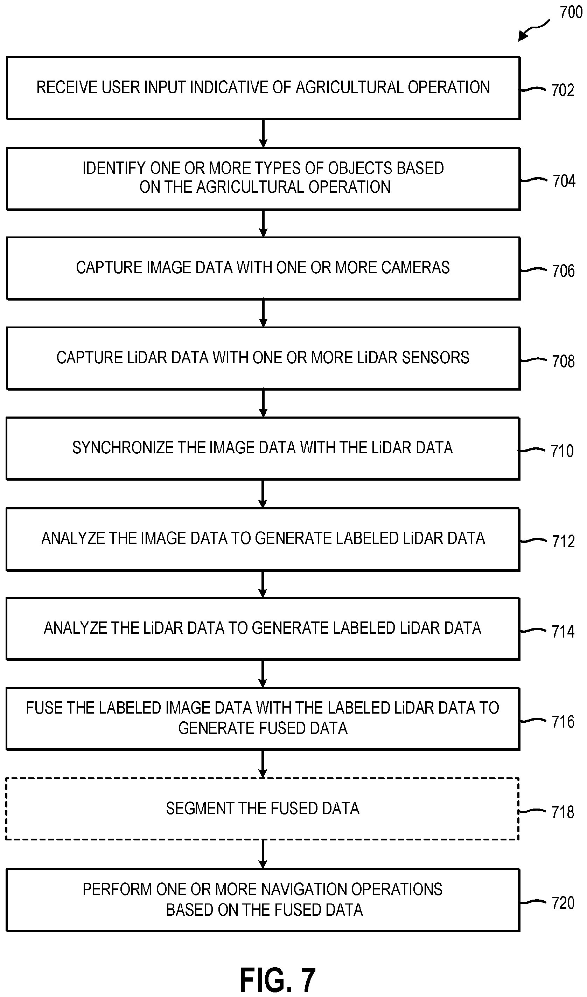

FIG. 7 is a simplified flow chart illustrating a method 700 of navigating a vehicle, according to one or more embodiments of the disclosure. The method 700 includes receiving a user input indicative of an agricultural operation to be performed, as shown in act 702. The agricultural operation may include, for example, one or more of a baling, planting, spraying, spreading, harvesting, cutting, swathing, tilling operation.

Responsive to receiving the user input indicative of the agricultural operation, the method 700 may include identifying one or more types of objects that may be present (e.g., proximate the vehicle) based on the selected agricultural operation, as shown in act 704. For example, responsive to receiving a selection of a planting operation in act 702, act 704 may include determining that objects that may be encountered include a planter (e.g., a towed implement including row units), a tractor, associations between objects (e.g., between a towed implement and the tractor), static objects (e.g., rocks, boulders, utility poles, windmills), animals, and humans. In some embodiments, each agricultural operation may include a unique list of objects that may be detected and may include a unique neural network trained with a unique set of agricultural data.

The method 700 may further include capturing image data with one or more cameras (e.g., cameras 115 (FIG. 2A, FIG. 2B)), as shown in act 706. Capturing the image data may include capturing the image data while operating (e.g., driving) the vehicle. The image data may include one or more of RGB image data, SWIR data, NIR data, and LWIR data. The image data may also include a timestamp. In some embodiments, the pixels of the image data includes coordinate information.

The method 700 may further include capturing LiDAR data with one or more LiDAR sensors (e.g., LiDAR sensors 116 (FIG. 2A, FIG. 2B)), as shown in act 708. Capturing the LiDAR data may include capturing the LiDAR data while operating (e.g., driving) the vehicle.

In some embodiments, the method 700 further includes synchronizing the image data and the LiDAR data, as shown in act 710. Synchronizing the image data and the LiDAR data may include synchronizing the image data in time with the LiDAR data, such that the frame rate of the image data corresponds to the scan rate of the LiDAR data, as described above with reference to FIG. 5 and FIG. 6.

Responsive to capturing the image data, the method 700 includes analyzing the image data to generate labeled image data, as shown in act 712. In some embodiments, analyzing the image data includes combining the image data to generate combined image data having a FOV corresponding to a FOV of the LiDAR sensor, as described above with reference to the combined image data 614 (FIG.6).

Analyzing the image data may further include performing one or more object detection operations, object tracking operations, object segmentation operations, and object detection and tracking operations on the image data. Analyzing the image data may include labeling objects identified in the image data. In some embodiments, analyzing the image data may include analyzing the image data with one or more neural networks (e.g., one or more deep neural networks) trained with agricultural data specific to an agricultural environment. The neural network may be selected during act 704, as described above. In some embodiments, analyzing the image data may include performing an object segmentation operation (e.g., an instance segmentation operation) on the image data, as described above with reference to FIG. 5 and FIG. 6. In some such embodiments, analyzing the image data includes generating segmented data.

The method 700 may further include analyzing the LiDAR data to obtain labeled LiDAR data (e.g., the labeled LiDAR data 534, 634), as shown in act 714. The LiDAR data may be processed with, for example, an agricultural object detection neural network, as described above with reference to FIG. 5 and FIG. 6, to generate the labeled LiDAR data.

Responsive to analyzing the image data and analyzing the LiDAR data, the method 700 includes fusing the labeled image data with the labeled LiDAR data, as shown in act 716. Fusing the labeled image data with the labeled LiDAR data may include performing one or more fusion operations on the labeled image data and the labeled LiDAR data, as described above with reference to the fusion manager 526, 626 (FIG. 5, FIG. 6).

Responsive to generating the fused data, the method 700 may optionally further include segmenting the fused data, as shown in act 718. Segmenting the fused data may be substantially similar to that described above with reference to FIG. 5 and FIG. 6.

The method 700 may further include performing one or more navigation operations based on the fused data, as shown at act 720. The one or more navigation operations may include controlling one or more of a propulsion system of the vehicle, the braking system of the vehicle, the steering of the vehicle, and a route of the vehicle. By way of non-limiting example, responsive to identifying an animal in the fused data, act 720 may include reducing a speed of the vehicle below a threshold (e.g., below about 8 kilometers per hour (about 5 miles per hour)). Responsive to identifying a human in the fused data, act 720 may include stopping the vehicle until the human has moved out of the path of the vehicle.

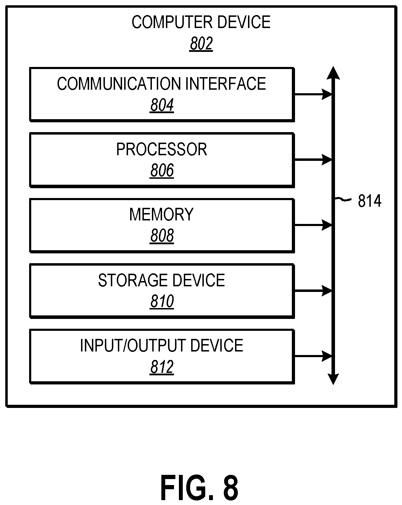

FIG. 8 is a schematic view of a computer device 802, in accordance with embodiments of the disclosure. The computer device 802 may correspond to the computing device 118 (FIG. 1). The computer device 802 may include a communication interface 804, at least one processor 806, a memory 808, a storage device 810, an input/output device 812, and a bus 814. The computer device 802 may be used to implement various functions, operations, acts, processes, and/or methods disclosed herein, such as the method 700.

The communication interface 804 may include hardware, software, or both. The communication interface 804 may provide one or more interfaces for communication (such as, for example, packet-based communication) between the computer device 802 and one or more other computing devices or networks (e.g., a server). As an example, and not by way of limitation, the communication interface 804 may include a network interface controller (NIC) or network adapter for communicating with an Ethernet or other wire-based network or a wireless NIC (WNIC) or wireless adapter for communicating with a wireless network, such as a Wi-Fi.

The at least one processor 806 may include hardware for executing instructions, such as those making up a computer program. By way of non-limiting example, to execute instructions, the at least one processor 806 may retrieve (or fetch) the instructions from an internal register, an internal cache, the memory 808, or the storage device 810 and decode and execute them to execute instructions. In some embodiments, the at least one processor 806 includes one or more internal caches for data, instructions, or addresses. The at least one processor 806 may include one or more instruction caches, one or more data caches, and one or more translation look aside buffers (TLBs). Instructions in the instruction caches may be copies of instructions in the memory 808 or the storage device 810.

The memory 808 may be coupled to the at least one processor 806. The memory 808 may be used for storing data, metadata, and programs for execution by the processor(s). The memory 808 may include one or more of volatile and non-volatile memories, such as Random-Access Memory ("RAM"), Read-Only Memory ("ROM"), a solid state disk ("SSD"), Flash, Phase Change Memory ("PCM"), or other types of data storage. The memory 808 may be internal or distributed memory.

The storage device 810 may include storage for storing data or instructions. As an example, and not by way of limitation, storage device 810 may include a non-transitory storage medium described above. The storage device 810 may include a hard disk drive (HDD), Flash memory, an optical disc, a magneto-optical disc, magnetic tape, or a Universal Serial Bus (USB) drive or a combination of two or more of these. The storage device 810 may include removable or non-removable (or fixed) media, where appropriate. The storage device 810 may be internal or external to the storage device 810. In one or more embodiments, the storage device 810 is non-volatile, solid-state memory. In other embodiments, the storage device 810 includes read-only memory (ROM). Where appropriate, this ROM may be mask programmed ROM, programmable ROM (PROM), erasable PROM (EPROM), electrically erasable PROM (EEPROM), electrically alterable ROM (EAROM), or Flash memory or a combination of two or more of these.

The storage device 810 may include machine-executable code stored thereon. The storage device 810 may include, for example, a non-transitory computer-readable storage medium. The machine-executable code includes information describing functional elements that may be implemented by (e.g., performed by) the at least one processor 806. The at least one processor 806 is adapted to implement (e.g., perform) the functional elements described by the machine-executable code. In some embodiments the at least one processor 806 may be configured to perform the functional elements described by the machine-executable code sequentially, concurrently (e.g., on one or more different hardware platforms), or in one or more parallel process streams.

When implemented by the at least one processor 806, the machine-executable code is configured to adapt the at least one processor 806 to perform operations of embodiments disclosed herein. For example, the machine-executable code may be configured to adapt the at least one processor 806 to perform at least a portion or a totality of the method 700 of FIG. 7. As another example, the machine-executable code may be configured to adapt the at least one processor 806 to perform at least a portion or a totality of the operations discussed for the vehicle 100 of FIG. 1. As a specific, non-limiting example, the machine-executable code may be configured to adapt the at least one processor 806 to cause the I/O device 132 of the vehicle 100 to display surroundings of the vehicle 100 including labeled instances of objects surrounding the vehicle, as described above with reference to the imaging controller 500, 600 of FIG. 5 and FIG. 6, and the method 700 of FIG. 7. In another non-limiting example, the machine-executable code may be configured to adapt the at least one processor 806 to cause the vehicle 100 to perform at least one navigation operation, as described above with reference to the method 700 of FIG. 7.

The input/output device 812 may allow an operator of the vehicle 100 to provide input to, receive output from, the computer device 802. The input/output device 812 may include a mouse, a keypad or a keyboard, a joystick, a touch screen, a camera, an optical scanner, network interface, modem, other known I/O devices, or a combination of such I/O interfaces.

In some embodiments, the bus 814 *(e.g.,* a Controller Area Network (CAN) bus, an ISOBUS (ISO 11783 Compliant Implement Control)) may include hardware, software, or both that couples components of computer device 802 to each other and to external components.

All references cited herein are incorporated herein in their entireties. If there is a conflict between definitions herein and in an incorporated reference, the definition herein shall control.

While the present disclosure has been described herein with respect to certain illustrated embodiments, those of ordinary skill in the art will recognize and appreciate that it is not so limited. Rather, many additions, deletions, and modifications to the illustrated embodiments may be made without departing from the scope of the disclosure as hereinafter claimed, including legal equivalents thereof. In addition, features from one embodiment may be combined with features of another embodiment while still being encompassed within the scope as contemplated by the inventors. Further, embodiments of the disclosure have utility with different and various machine types and configurations.

## Claims

1. An agricultural vehicle, comprising:
cameras operably coupled to the agricultural vehicle;
a LiDAR sensor operably coupled to the agricultural vehicle; and
an imaging controller operably coupled to the LiDAR sensor and the cameras, the imaging controller comprising:
at least one processor; and
at least one non-transitory computer-readable storage medium having instructions thereon that, when executed by the at least one processor, cause the imaging controller to:
receive image data from the cameras;
receive LiDAR data from the LiDAR sensor;
analyze the image data from each of the cameras using one or more agricultural object detection neural networks trained with an agricultural dataset to generate labeled image data;
analyze the LiDAR data from the LiDAR sensor using a LiDAR agricultural object detection neural network trained with another agricultural dataset to generate labeled LiDAR data; and
fuse the labeled image data with the labeled LiDAR data.

2. The agricultural vehicle of claim 1, wherein each camera has a different field of view than other cameras.

3. The agricultural vehicle of claim 1, wherein a field of view of at least one camera overlaps at least a portion of a field of view of at least another camera.

4. The agricultural vehicle of any one of claims 1 through 3, wherein the imaging controller comprises instructions thereon that, when executed by the at least one processor, cause the imaging controller to analyze the image data from at least one camera using an agricultural object detection neural networks different than another agricultural object detection neural networks used to analyze the image data from at least another camera.

5. The agricultural vehicle of any one of claims 1 through 4, wherein the imaging controller comprises instructions thereon that, when executed by the at least one processor, cause the imaging controller to identify pixels in the labeled image data including image data from two or more cameras that do not agree with one another.

6. The agricultural vehicle of any one of claims 1 through 5, wherein the labeled image data comprises only image data from a camera having a relatively narrower field of view in regions having overlapping fields of view of two or more cameras.

7. The agricultural vehicle of any one of claims 1 through 6, wherein the imaging controller comprises instructions thereon that, when executed by the at least one processor, cause the imaging controller to cause the cameras to generate the image data at different times.

8. The agricultural vehicle of any one of claims 1 through 7, wherein the imaging controller comprises instructions thereon that, when executed by the at least one processor, cause the imaging controller to combine image data from each camera prior to analyzing the image data.

9. The agricultural vehicle of any one of claims 1 through 8, wherein the imaging controller comprises instructions thereon that, when executed by the at least one processor, cause the imaging controller to fuse segmented image data with the labeled LiDAR data.

10. The agricultural vehicle of any one of claims 1 through 8, wherein the imaging controller comprises instructions thereon that, when executed by the at least one processor, cause the imaging controller to perform one or more object segmentation operations on the fused data.

11. The agricultural vehicle of any one of claims 1 through 10, wherein the image data comprises RGB data and at least one of SWIR data and LWIR data.

12. The agricultural vehicle of any one of claims 1 through 11, further comprising at least one additional controller configured to perform one or more control operations of the agricultural vehicle based on the fused data.

13. An agricultural vehicle, comprising:
a plurality of cameras, each individually operably coupled to the agricultural vehicle;
a LiDAR sensor operably coupled to the agricultural vehicle; and
an imaging controller operably coupled to the LiDAR sensor and the cameras, the imaging controller comprising:
at least one processor; and
at least one non-transitory computer-readable storage medium having instructions thereon that, when executed by the at least one processor, cause the imaging controller to:
receive image data from the cameras;
receive LiDAR data from the LiDAR sensor;
compare pixels of the image data from each camera to corresponding pixels of the image data from another camera;
analyze the LiDAR data from the LiDAR sensor to generate labeled LiDAR data; and
fuse the image data with the labeled LiDAR data to generate fused data.

14. The agricultural vehicle of claim 13, wherein the imaging controller comprises instructions thereon that, when executed by the at least one processor, cause the imaging controller to label pixels of the image data that do not match the image data of corresponding pixels from another camera.

15. The agricultural vehicle of claim 13 or claim 14, wherein imaging controller comprises instructions thereon that, when executed by the at least one processor, cause the imaging controller to selectively fuse, with the labeled LiDAR data, image data from a camera having a relatively narrower field of view than another camera in regions with an overlapping field of view.

16. The agricultural vehicle of any one of claims 13 through 15, wherein imaging controller comprises instructions thereon that, when executed by the at least one processor, cause the imaging controller to label the image data prior to comparing pixels of the image data.

17. The agricultural vehicle of any one of claims 13 through 16, wherein imaging controller comprises instructions thereon that, when executed by the at least one processor, cause the imaging controller to segment the image data and generated segmented image data prior to fusing the image data with the labeled LiDAR data.

18. A method of operating an agricultural vehicle, the method comprising:
receiving image data from cameras operably coupled to the agricultural vehicle;
receiving LiDAR data from a LiDAR sensor operably coupled to the agricultural vehicle;
analyzing the image data from each camera using one or more agricultural object detection neural networks trained with an agricultural dataset to generate labeled image data;
fusing the LiDAR data with labeled image data to generate fused data; and
controlling one or more operations of the agricultural vehicle based on the fused data.

19. The method of claim 18, further comprising combining the image data from each camera to generate combined image data, wherein analyzing the image data from each camera comprises analyzing the combined image data.

20. The method of claim 18 or claim 19, further comprising performing an object segmentation operation on the fused data to identify instances of objects in the fused data.
